# EUROPEAN PATENT SPECIFICATION

(11) **EP 3 297 065 B1**
(45) Date of publication and mention of the grant of the patent: **19.06.2019**
(21) Application number: 16200933.6
(22) Date of filing: 28.11.2016
(51) Int. Cl.: H01M 2/36, H01M 2/38, H01M 10/052, H01M 10/42

(54) **HIGH CAPACITY LITHIUM ACCUMULATOR WITH ENHANCED SAFETY**
LITHIUMAKKUMULATOR MIT HOHER KAPAZITÄT UND MIT ERHÖHTER SICHERHEIT
ACCUMULATEUR AU LITHIUM À HAUTE CAPACITÉ PRÉSENTANT UNE MEILLEURE SÉCURITÉ

(30) Priority: 15.09.2016 CZ 20160569
(43) Date of publication of application: 21.03.2018
(73) Proprietor: EXIMPO, akciová spolecnost, 160 00 Praha 6 (CZ)
(72) Inventor: POLÍVKA, Jaroslav, 160 00 Praha 6 (CZ)
(74) Representative: Hak, Roman

(56) References cited:
- WO-A1-2014/013981
- JP-A- 2003 123 736
- US-A- 3 551 208
- US-A- 5 876 872
- US-B1- 6 355 373

## Description

### Field of the invention

The invention relates to a design of a lithium accumulator, wherein the negative electrode consists of metallic lithium, particularly in dendritic form. The accumulator comprises the positive and negative electrode modules, isolated by separator. Under emergency, the modules can be moved away mechanically, while simultaneously the electrolyte is expelled from the negative electrode module by emergency liquid, thus undesirable chemical reactions and possible fire or explosion of the accumulator are avoided. Such an inactivation of the accumulator is fully reversible, after the emergency situation subsides, the electrode modules can be easily returned to their original position and the emergency liquid can be replaced by the electrolyte again. By designing the accumulator of the invention a high capacity can be achieved while enhancing the safety of the accumulator under operation.

### Background of the invention

Using high capacity accumulators (i.e. secondary batteries) or accumulator packages containing lithium salts is associated with the problem of a decreasing ratio between increasing power and consequently the weight of the accumulator and the area that is available to dissipate heat generated in chemical reactions accompanying the charging and discharging of the accumulator. Maintenance of the operating temperature in the range, which is defined by the security limits and which excludes overheating of the accumulator, which can result in fire or explosion, or operation at higher temperatures wherein the accumulator life is markedly reduced, requires additional devices providing enhanced heat exchange. Such a need can occur in the opposite case of extremely low temperatures at which the power of the accumulator decreases significantly and it is necessary to increase its initial operating temperature by heat exchange, especially during charging.

The international application WO 2010/031363 disclosed a lithium accumulator comprising a bundle of superposed metal frames, wherein each frame comprises an opening in which a thick-walled, so called. 3D electrode is placed and the electrodes of opposite polarity are separated by separators and frames of opposite polarity are isolated from each other. Although metal frames allow for better heat dissipation from the interior of the accumulator, they do not guarantee safe dissipation of heat in large-sized electrodes, and the more so in high-capacity accumulators having a plurality of juxtaposed bundles.

One possible solution of cooling of accumulator packages offers the patent application WO 2005/324563, which describes a substrate or rather a body, in which groups of cells are deposited and which makes the accumulator system resistant against vibrations, and also pipes for the heat exchange medium, fitted within the system.

The European patent EP 2619836 presents another solution of temperature control of lithium accumulator with a large capacity which discloses an accumulator module suitable for the cooling system and comprising also a variant using a liquid electrolyte as a cooling medium.

The Czech patent No. 305849 describes a safety emergency system for lithium accumulator with electrodes susceptible to overheating or short circuit. The system includes an additional tank with emergency medium into which the accumulator modules are immersed, wherein in case of an imminent threat of fire, the emergency medium floods the interior of the accumulator by pressurized mineral oil driven by an inert gas.

The aim of the current development in the field of lithium cells is to increase the voltage and capacity and increase the safety of their operations at the same time.

The object of the present invention is to solve the issue of construction of the accumulator composed preferably only of cells having dendrites of lithium and vanadium oxides. Such an accumulator could achieve several-fold higher capacity while reducing the weight and size in comparison with standard accumulators, however, safe structure of such an accumulator has not been disclosed. Design of lithium accumulator disclosed in the present invention meets the highest demands on safety even when operating in extreme conditions and during potential accidents.

### Summary of the invention

The lithium accumulator (secondary battery) with high capacity and enhanced safety of operation according to the present invention comprises modules of positive and negative electrodes isolated by a separator, which modules in case of emergency condition may be mechanically set apart (disconnected), while simultaneously liquid electrolyte from the negative electrode module is expelled and replaced by the emergency liquid, thereby preventing undesirable chemical reaction and possible fire or explosion of the accumulator. The construction of the accumulator according to the invention allows using lithium metal, particularly lithium in a dendritic form, for the negative electrode and in combination with the positive electrode, preferably from the oxides of vanadium, to achieve high capacity, while improving safety of the accumulator operation. Accumulator design according to the invention which enhances the safety of operation can be used also for the accumulators with electrode made from lithium compounds, e.g. salts, known in the art.

The accumulator body is formed by a cylindrical sleeve made of nonconductive, i.e. dielectric material, which comprises a negative electrode module and two positive electrode modules, wherein the assembly of the sleeve and the electrode modules is enclosed in a solid accumulator housing. The housing is provided with vent valves. The electrode modules have a common distribution of electrolyte using a double-acting pump which allows the electrolyte flow in both directions for charging/discharging the accumulator. The electrolyte flow can be regulated.

The negative electrode module is formed by a metal hollow cylinder, i.e. cylinder jacket, preferably made of aluminium, inside which the electrode is placed. The cylinder is closed at both ends by a cover formed by the separator. The negative electrode module is firmly fixed in the sleeve forming the accumulator body. Fixation is hydraulically leak-proof, so that the electrolyte or emergency liquid can pass only through the separator layers.

Each of the two positive electrode modules is formed by a metal hollow cylinder, i.e. cylinder jacket, preferably made of copper, inside which the electrode is placed. The cylinder is at its inner end (facing the negative electrode module) closed by a cover formed by the separator layer and is tightly closed at its outer side by a lid with an inlet and possibly the distributor plate for circulation of electrolyte. The positive electrodes modules are movably placed in the cylindrical sleeve so that they can move in the direction of the longitudinal axis of the sleeve like a piston in both directions, but they are hydraulically leak-proofed so that the electrolyte or emergency liquid can pass only through the separator layers. Under normal operation of the accumulator, the positive electrode modules are pressed towards the negative electrode module by pressure springs, wherein the force of the springs can be controlled.

The electrodes are constructed in principle likewise as in the Czech Patent No. 305849. Both the negative electrode and the positive electrode are pressed two-sided onto a current collector made of perforated metal (for example, preferably Al for negative electrode and Cu for the positive electrode) strip (in the form of expanded metal, mesh, perforated or porous film), wherein the individual electrode strips are isolated by a separator. Metal cylinder casings of the electrode modules, in which the electrodes themselves are located, are mutually isolated by separators.

A suitable material for the separator is e.g. a polyolefin porous film or non-woven glass or ceramic fibres made of ZrO₂, Al₂O₃, or corundum.

The negative electrode is preferably made from metallic lithium, preferably in the form of dendrites. The use of dendritic lithium significantly reduces the weight and dimensions of the accumulator, while simultaneously increases the voltage and capacity of the lithium accumulator towards the theoretical limit. Due to the arrangement of the electrodes and the structure of the accumulator in connection with emergency fluid reservoir the safety of operation of such an accumulator is enhanced.

The positive electrode material may be selected from a group of materials known in the art, preferably the oxides of vanadium, more preferably vanadium pentoxide.

Separators which seal both ends of negative electrode module and the side of positive electrode modules facing the negative electrode module enable two-way passage of the electrolyte. The accumulator comprises also double-acting pump to circulate the electrolyte, while the flow rate can be controlled to affect the rate of charging/discharging the accumulator.

The negative electrode module is connected via the safety valve with emergency liquid reservoir filled with emergency liquid, which is preferably a mineral oil, diesel oil or mixtures thereof, and pressurized inert gas, e.g. argon.

In case of emergency condition, the emergency regimen is initiated by disconnection of accumulator contacts, by release of the pressure springs, by opening the safety valve and by closing the valve for circulation of the electrolyte. The emergency liquid, driven by the pressurized gas, starts to flood the negative electrode module and thus expels the electrolyte into the space between the modules. The space for the expelled electrolyte is produced and increases due to the pressure of emergency liquid and argon, which overcomes the released force of the pressure springs and moves positive electrode modules away from the negative electrode module. This action will almost immediately disconnect the electrode modules, electrolyte is expelled from the negative electrode module and is replaced by the emergency liquid which completely saturates lithium dendrites, and cools the accumulator and thus prevents undesirable chemical reaction of lithium dendrites. This eliminates the short circuit of the accumulator which might be the cause of subsequent fire or explosion of the accumulator.

The emergency system of the accumulator comprises temperature and vibration monitoring system equipped with sensors which, if pre-set limits are exceeded, initiate emergency regimen and particularly disconnect accumulator contacts, release the pressure springs and open/close the appropriate valves. This part of the emergency system is not described in detail in the present specification since it is a commonly known part of safety systems of lithium accumulators.

The above described emergency inactivation of the accumulator is fully reversible. After the emergency situation subsides, the electrode modules can easily be returned to its original operating state by draining the emergency liquid and replenishing the accumulator electrolyte from the electrolyte reservoir.

The new structure of the accumulator allows using lithium dendrites as material for the negative electrode in the accumulators. The theoretical capacity increase using lithium dendrites compared to a lithium salt is up to twenty times. The capacity of lithium metal is 3865 to 3888 mAh/g compared to the capacity of lithium salts which is about 175 mAh/g. To obtain a capacity of 1 kAh one can use only 0.26 kg of lithium dendrites compared to 5.7 kg of lithium salts. The use of vanadium oxides to make the positive electrode allows reaching the capacity in the range of about 295 to 442 mAh/g, depending on the level of lithiation. At the same time the disclosed construction enables attaching the positive electrodes on both sides of the negative electrode.

It is necessary to maintain the ratio of the capacity of electrodes and mutual ion exchange in the range 8:1 to 13:1 (vanadium oxide: lithium dendrites), depending on the quality of the used materials.

The invention referred throughout the description is the lithium accumulator as defined in the attached claims 1 to 8.

### Brief description of the drawings

Fig. 1 shows in panel A a schematic sectional view of an accumulator, in panel B a top view of the accumulator.
Fig. 2 shows a schematic sectional view of an accumulator as in Fig. 1A in emergency situations after moving apart (disconnecting) the electrode modules.

### Example of the embodiment

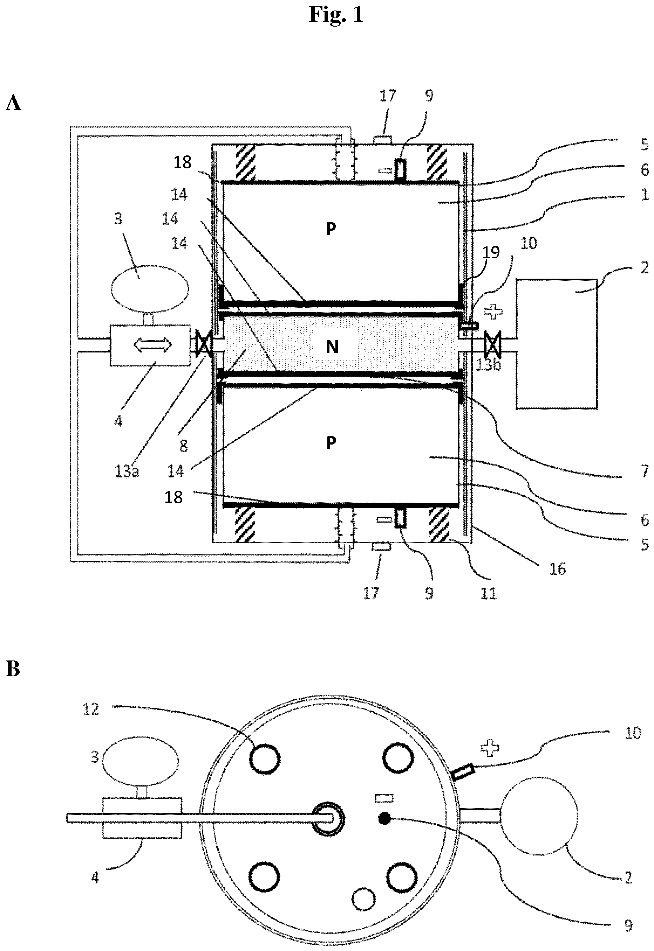

The lithium accumulator according to the invention is exemplified in a preferred embodiment schematically shown in the accompanying drawings, in which Fig. 1A is the accumulator in a sectional view and Fig. 1B is a top view.

The body of the lithium accumulator consists of a cylindrical sleeve 1 which is made of dielectric material and comprises a negative electrode module N and two positive electrode modules P, wherein the assembly of the sleeve 1 and modules N and P is enclosed in a solid housing 16 of the accumulator. The housing 16 is provided with vent valves 17.

The negative electrode module N is formed by a hollow cylinder 7 made of aluminium (Al), inside which is placed the electrode 8 comprising layers of lithium (Li) dendrites pressed to the expanded metal as a current collector. The cylinder 7 is at both ends closed by a cover formed by the separator 14**.** The negative electrode module N is firmly fixed in the cylinder sleeve 1 forming the body of the accumulator. The fixation is hydraulically leak-proof, which means that the electrolyte or emergency liquid can only pass the separator layer 14 and not the space between the outer side of the cylinder 7 and the inner side of the cylinder 1. Current collectors are brought together into a conductor, which forms the positive pole 10 of the accumulator.

Each of the two positive electrode modules P of is formed by a hollow cylinder 5 made of copper (Cu), inside which is placed the electrode 6 comprising layers of vanadium pentoxide (V₂O₅) pressed to the expanded metal as a current collector. Current collectors are brought together into the conductor, which forms the negative pole 9 of the accumulator.

The cylinder 5 is at its inner end (facing the negative electrode) closed by a cover formed by a layer of the separator 14 and the outer side is tightly closed by a solid lid 18 with an inlet and distribution plate for circulation of the electrolyte. The positive electrode modules P are in the cylindrical sleeve 1 placed movably (they are able to move in cylinder sleeve 1 like a piston in both directions along the longitudinal axis of the cylinder 1, but they are hydraulically leak-proof by means of seals 19, so that the electrolyte or emergency fluid can only pass through the separator 14 and not in the space between the outer side of the cylinder 5 and the inner side of the sleeve 1. During normal operation, the positive electrode modules P are pushed by pressure springs 11 towards the negative electrode module N, wherein the pressure of springs 11 can be controlled by means of regulators 12.

Separators 14, which close the negative electrode module N on both sides, and the positive electrode modules P on the side facing the module N, allow bidirectional passage of the electrolyte. The accumulator comprises also a double-acting pump 4, which is connected to the negative electrode module N via a valve 13a, and allows the circulation of the electrolyte, wherein the flow rate can be controlled and thus the rate of charging/discharging the accumulator can be affected.

An emergency reservoir 2 filled with the emergency liquid, which is mineral oil, and pressurized argon is connected to the negative electrode module N via a valve 13b.

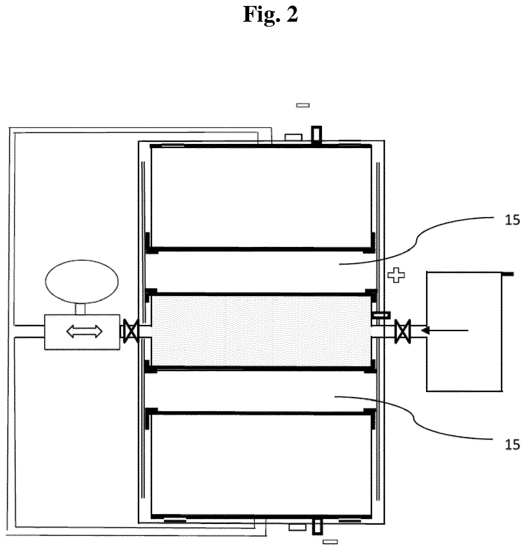

In emergency situation, by opening the valve 13b the emergency liquid starts to flood the negative electrode module N due to the action of pressurized gas and to expel the electrolyte into the space 15 (see Fig. 2) between the module N and the modules P. The space 15 is formed and increased after the closing of valve 13a due to the pressure of emergency fluid and argon, which overcome the released force of pressure springs 11 and move the modules P away from the modules N. This will almost immediately disconnect the accumulator, the electrolyte is drained form the module N and it is replaced with the emergency liquid, which completely saturates lithium dendrites and simultaneously cools the module and thus prevents undesirable chemical reaction of lithium dendrites. This action eliminates the short circuit of the accumulator which might result in subsequent fire or explosion of the accumulator.

The emergency system of the accumulator comprises temperature and vibration monitoring system equipped with sensors which, if the pre-set limit is exceeded, activate emergency regimen by disconnecting accumulator contacts, releasing the pressure springs and opening the valve 13b and closing the valve 13a. This part of the emergency system is not in shown in FIGS. 1 and 2 as its configuration is commonly known part of the security systems.

After the emergency situation subsides, the electrode modules P can easily be returned to its original operating position, the emergency liquid drained and the electrolyte replenished from the reservoir 3 and thus full function of the accumulator can be restored.

### Industrial applicability

The present invention enables to use metal lithium, i.e. lithium dendrites in the accumulators and by this to approximate the real capacity of the accumulator to the theoretical maximum values. Design of the accumulator according to the present invention can be used for the construction of high-capacity accumulators with high safety which find their usage everywhere where they can be exposed to extreme heat or vibration conditions, namely in transportation means, such as cars or boats.

### List of reference numerals

N - negative electrode module
P - positive electrode module
1 - cylindrical sleeve made of dielectrics
2 - emergency reservoir filled with emergency liquid and compressed inert gas
3 - electrolyte reservoir
4 - double-acting pump
5 - cylinder jacket made of Cu
6 - V₂O₅ crystals pressed onto expanded metal
7 - cylinder jacket made of Al
8 - Li dendrites pressed onto expanded metal
9 - accumulator minus pole
10 - accumulator plus pole
11 - pressure spring
12 - pressure spring regulator
13a - valve for the output of electrolyte
13b - safety valve for the input of emergency liquid
14 - separator
15 - space for expelled electrolyte
16 - solid accumulator housing
17 - vent valves
18 - solid lid with an inlet for electrolyte
19 - seal

## Claims

1. A lithium accumulator comprising positive and negative electrodes and a liquid electrolyte, **characterized in that** the structure of the accumulator comprises a cylindrical sleeve (1) made of dielectric material which comprises a negative electrode module (N) and two positive electrode modules (P), wherein the assembly of the sleeve (1) and the modules (N) and (P) is enclosed in a solid housing (16), the negative electrode module (N) is firmly fixed in the cylindrical sleeve (1) and the positive electrode modules (P) are placed in the cylindrical sleeve (1) movably along the longitudinal axis of the cylinder (1), whereas they are hydraulically sealed and they are pushed by pressure springs (11) towards the negative electrode module (N), and the module (N) is closed on both ends by separators (14) enabling the passage of electrolyte, the modules (P) are closed by separators (14) enabling the passage of the electrolyte at their inner end and their outer end is closed with a lid (18) provided with the inlet and a distributor plate for circulation of the electrolyte, the negative electrode module (N) is connected to the circulation pump (4) via a valve (13a) and to a safety reservoir (2) filled with emergency liquid and pressurized inert gas via a valve (13b).

2. The lithium accumulator according to claim 1, **characterized in that** the negative electrode module (N) is formed by a hollow cylinder (7), preferably made of aluminium, inside which the electrode (8) is placed, the electrode being formed by layers of lithium salts or metallic lithium, preferably lithium dendrites, pressed onto the current collector, which is expanded metal, mesh, perforated or porous film, preferably made of aluminium.

3. The lithium accumulator according to claim 1 or 2, **characterized in that** each of the two positive electrode modules (P) is formed by a hollow cylinder (5), preferably made of copper, inside which the electrode (6) is placed, the electrode being formed by layers of vanadium oxide, preferably vanadium pentoxide, pressed onto the current collector, which is expanded metal, mesh, perforated or porous film, preferably made of copper.

4. The lithium accumulator according to any of claims 1 to 3, **characterized in that** the current collectors from electrode modules (N) or (P) are brought together to the corresponding poles (9, 10) of the accumulator.

5. The lithium accumulator according to any of claims 1 to 4, **characterized in that** the pressure springs (11) are provided with regulators (12) of the pressure force.

6. The lithium accumulator according to any of claims 1 to 5, **characterized in that** the emergency liquid in the emergency liquid reservoir (2) is mineral oil, diesel oil, or mixtures thereof, and the inert pressurized gas is argon.

7. The lithium accumulator according to any of claims 1 to 6, **characterized in that** the pump (4) is connected to the electrolyte reservoir (3).

8. The lithium accumulator according to any of claims 1 to 7, **characterized in that** the housing (16) is provided with vent valves (17).

## Patentansprüche

1. Lithiumakkumulator umfassend eine positive und eine negative Elektrode und einen flüssigen Elektrolyt, **dadurch gekennzeichnet, dass** die Konstruktion des Akkumulators ein zylindrisches Gehäuse (1) aus einem nichtleitenden Material umfasst, das einen Modul (N) der negativen Elektrode und zwei Module (P) der positiven Elektrode umfasst, wobei die Baugruppe des Gehäuses (1) und der Module (N) und (P) in einer festen Umhüllung (16) eingeschlossen ist, der Modul (N) der negativen Elektrode fest in dem zylindrischen Gehäuse (1) befestigt ist und die Module (P) der negativen Elektroden in dem zylindrischen Gehäuse (1) der Längsachse des Zylinders (1) entlang beweglich angeordnet sind, wobei sie hydraulisch abgedichtet sind und durch Druckfedern (11) in der Richtung des Moduls (N) der negativen Elektrode gedrückt werden und der Modul (N) an beiden Enden durch Separatoren (14) geschlossen ist, die den Durchgang des Elektrolyten ermöglichen, die Module (P) an ihrem inneren Ende durch Separatoren (14) verschlossen sind, die den Durchgang des Elektrolyten ermöglichen, und an ihrem äußeren Ende durch einen Deckel (18) verschlossen sind, der mit einem Eingang und einer Verteilungsplatte zur Zirkulation des Elektrolyten versehen ist, der Modul (N) der negativen Elektrode durch ein Ventil (13a) mit der Zirkulationspumpe (4) und durch ein Ventil (13b) mit einem mit Notflüssigkeit und Inertdruckgas gefüllten Sicherheitsbehälter (2) verbunden ist.

2. Lithiumakkumulator nach Anspruch 1, **dadurch gekennzeichnet, dass** der Modul (N) der negativen Elektrode durch einen vorzugsweise aus Aluminium erzeugten Hohlzylinder (7) gebildet ist, in dessem Inneren die Elektrode (8) angeordnet ist, wobei die Elektrode durch Schichten von Lithiumsalze oder metallischen Lithium, vorzugsweise Lithiumdendriten, gebildet ist, die an einem Stromkollektor angepresst sind, der ein Streckmetall, ein Netzgewebe, eine perforierte oder poröse Folie ist, vorzugsweise aus Aluminium erzeugt.

3. Lithiumakkumulator nach Anspruch 1 oder 2, **dadurch gekennzeichnet, dass** jeder der zwei Module (P) der positiven Elektroden durch einen vorzugsweise aus Kupfer erzeugten Hohlzylinder (5) gebildet ist, in dessem Inneren die Elektrode (6) angeordnet ist, wobei die Elektrode durch Schichten von Vanadiumoxid, vorzugsweise Vanadiumpentoxid, gebildet ist, die an einem Stromkollektor angepresst sind, der ein Streckmetall, ein Netzgewebe, eine perforierte oder poröse Folie ist, vorzugsweise aus Kupfer erzeugt.

4. Lithiumakkumulator nach einem der Ansprüche 1 bis 3, **dadurch gekennzeichnet, dass** die Stromkollektoren aus den Elektrodenmodulen (N) oder (P) zu den entsprechenden Polen (9, 10) des Akkumulators zusammengeführt sind.

5. Lithiumakkumulator nach einem der Ansprüche 1 bis 4, **dadurch gekennzeichnet, dass** die Druckfedern (11) mit Druckkraftreglern (12) versehen sind.

6. Lithiumakkumulator nach einem der Ansprüche 1 bis 5, **dadurch gekennzeichnet, dass** die Notflüssigkeit im Notflüssigkeitsbehälter (2) Mineralöl, Dieselöl oder Mischungen davon ist und das Inertdruckgas Argon ist.

7. Lithiumakkumulator nach einem der Ansprüche 1 bis 6, **dadurch gekennzeichnet, dass** die Pumpe (4) mit dem Elektrolytspeicher (3) verbunden ist.

8. Lithiumakkumulator nach einem der Ansprüche 1 bis 7, **dadurch gekennzeichnet, dass** die Umhüllung (16) mit Entlüftungsventilen (17) versehen ist.

## Revendications

1. Accumulateur au lithium comprenant des électrodes positive et négative et un électrolyte liquide, **caractérisé en ce que** la structure de l'accumulateur comprend un manchon cylindrique (1) fabriqué en un matériau diélectrique qui comprend un module d'électrode négative (N) et deux modules d'électrode positive (P), dans lequel l'ensemble du manchon (1) et des modules (N) et (P) est enfermé dans un boîtier solide (16), le module d'électrode négative (N) est fixé solidement dans le manchon cylindrique (1) et les modules d'électrode positive (P) sont placés dans le manchon cylindrique (1) de manière mobile le long de l'axe longitudinal du cylindre (1), alors qu'ils sont hydrauliquement étanches et qu'ils sont poussés par des ressorts de pression (11) vers le module d'électrode négative (N), et que le module (N) est fermé à chaque extrémité par des séparateurs (14) permettant le passage d'électrolyte, les modules (P) sont fermés par des séparateurs (14) permettant le passage de l'électrolyte au niveau de leur extrémité interne et leur extrémité externe est fermée par un couvercle (18) doté de l'entrée et d'une plaque distributrice pour la circulation de l'électrolyte, le module d'électrode négative (N) est connecté à la pompe de circulation (4) par l'intermédiaire d'une soupape (13a) et à un réservoir de sécurité (2) rempli d'un liquide d'urgence et d'un gaz inerte sous pression par l'intermédiaire d'une soupape (13b).

2. Accumulateur au lithium selon la revendication 1, **caractérisé en ce que** le module d'électrode négative (N) est formé par un cylindre creux (7), de préférence fabriqué en aluminium, à l'intérieur duquel l'électrode (8) est placée, l'électrode étant formée par des couches de sels de lithium ou de lithium métallique, de préférence de dendrites de lithium, pressées sur le collecteur de courant, qui est un film de métal déployé, en treillis, perforé ou poreux, de préférence fabriqué en aluminium.

3. Accumulateur au lithium selon la revendication 1 ou 2, **caractérisé en ce que** chacun des deux modules d'électrode positive (P) est formé par un cylindre creux (5), de préférence fabriqué en cuivre, à l'intérieur duquel l'électrode (6) est placée, l'électrode étant formée par des couches d'oxyde de vanadium, de préférence de pentoxyde de vanadium, pressées sur le collecteur de courant, qui est un film de métal déployé, en treillis, perforé ou poreux, de préférence fabriqué en cuivre.

4. Accumulateur au lithium selon l'une quelconque des revendications 1 à 3, **caractérisé en ce que** les collecteurs de courant à partir des modules électrode (N) ou (P) sont rassemblés aux pôles correspondants (9, 10) de l'accumulateur.

5. Accumulateur au lithium selon l'une quelconque des revendications 1 à 4, **caractérisé en ce que** les ressorts de pression (11) sont dotés de régulateurs (12) de la force de pression.

6. Accumulateur au lithium selon l'une quelconque des revendications 1 à 5, **caractérisé en ce que** le liquide d'urgence dans le réservoir de liquide d'urgence (2) est une huile minérale, du gasoil, ou un mélange de ceux-ci, et le gaz sous pression inerte est de l'argon.

7. Accumulateur au lithium selon l'une quelconque des revendications 1 à 6, **caractérisé en ce que** la pompe (4) est connectée au réservoir d'électrolyte (3).

8. Accumulateur au lithium selon l'une quelconque des revendications 1 à 7, **caractérisée en ce que** le boîtier (16) est doté de soupapes d'évacuation (17).
